# EUROPÄISCHE PATENTANMELDUNG

(11) **EP 2 230 745 A1**
(43) Veröffentlichungstag der Anmeldung: **22.09.2010**
(21) Anmeldenummer: 09003852.2
(22) Anmeldetag: 18.03.2009
(51) Int. Cl.: H02J 7/35, G01R 31/26, H04L 12/40

(54) **Verfahren zur Fehlererkennung einer Energieerzeugungsanlage oder von Teilen einer Energieerzeugungsanlage, insbesondere einer PV-Anlage**

(71) Anmelder: SMA Solar Technology AG, 34266 Niestetal (DE)
(72) Erfinder: Magnussen, Björn, Dr.-Ing., 34131 Kassel (DE); Ützfeld-Brandt, Michael, 34123 Kassel (DE); Wagner, Roland, 34128 Kassel (DE)
(74) Vertreter: Walther, Walther & Hinz GbR

(57) **Zusammenfassung**

Gegenstand der Erfindung ist ein Verfahren zur Fehlererkennung einer Energieerzeugungsanlage oder von Teilen einer Energieerzeugungsanlage, insbesondere einer PV-Anlage, umfassend mehrere Energieerzeuger mit mehreren Anlagenteilnehmern (10), zum Beispiel Wechselrichtern, Datenloggern usw., wobei jeder Anlagenteilnehmer (10) mit mindestens einem benachbarten Anlagenteilnehmer (10) durch eine nur zwischen den beiden unmittelbar benachbarten Teilnehmern bestehende, segmentierte Leitung (3) in Verbindung steht, wobei jeder Teilnehmer (10) mindestens eine Sender/Empfängereinheit (12) aufweist, wobei auf die segmentierte Leitung durch die jeweilige Sender/Empfängereinheit ein Signal , z. B. ein Sinussignal, aufgeprägt wird, das von der Sender/Empfängereinheit (12) des jeweils benachbarten Anlagenteilnehmers empfangen wird.

## Beschreibung

Die Erfindung betrifft ein Verfahren zur Fehlererkennung einer Energieerzeugungsanlage oder von Teilen einer Energieerzeugungsanlage, insbesondere einer PV-Anlage, umfassend mehrere Energieerzeuger mit mehreren Anlagenteilnehmern, zum Beispiel Wechselrichtern, Datenloggern, Sensoren usw.

Größere PV-Anlagen weisen eine Vielzahl von Wechselrichtern, Datensammlern, Kommunikationseinrichtungen usw. auf. Hierbei kann es vorkommen, dass einzelne Anlagenteilnehmer ausfallen, oder die stromführenden Leitungen zwischen den einzelnen Teilnehmern gestört sind. In großen PV-Anlagen ist die Ermittlung solcher Fehler aufwändig, da die einzelnen Anlagenteilnehmer und Leitungen zwischen ihnen einzeln überprüft werden müssen.

Der Erfindung liegt daher die Aufgabe zugrunde, ein Verfahren bereitzustellen, das eine einfache Fehlererkennung ermöglicht.

Zur Lösung der Aufgabe wird ein Verfahren mit den Merkmalen des Anspruches 1 vorgeschlagen. Hieraus wird deutlich, dass jeder Anlagenteilnehmer mit mindestens einem benachbarten Teilnehmer in elektrischer Verbindung steht, wobei jeder Teilnehmer mindestens eine Sender/Empfängereinheit aufweist, wobei zwischen den Sender/Empfängereinheiten zweier benachbarter Teilnehmer mindestens ein Signal übertragen wird, dessen Reichweite durch den Abstand durch die segmentierte Versorgungsleitung zwischen zwei unmittelbar benachbarten Anlagenteilnehmern mit den entsprechenden Sender/Empfängereinheiten vorgegeben ist. Das heißt, es wird zwischen den einzelnen Anlagenteilnehmern bezogen auf die Gesamtanlage ein lediglich segmentiertes Signal übermittelt, nämlich ein Signal nur zwischen zwei unmittelbar benachbarten Teilnehmern. Hierdurch wird die Möglichkeit eröffnet, zum einen zu überprüfen, ob der jeweilige Teilnehmer mit seinem Nachbarn in Verbindung steht und darüber hinaus festzustellen, ob der Teilnehmer aktiv ist. Denn durch die Übermittlung von Signalen zwischen den einzelnen benachbarten Teilnehmern erfährt der jeweilige Teilnehmer von der Aktivität des benachbarten Teilnehmers.

Weitere vorteilhafte Merkmale und Ausgestaltungen der Erfindung in Form auch von Varianten sind den Unteransprüchen zu entnehmen.

Die Stromversorgungsleitung ist eine solche, die nur der Energieversorgung der Kommunikationsteilnehmer dient. Für den Transport der von der PV-Anlage produzierten Leistung gibt es weitere Strom führende Leitungen, wobei die Versorgungsleitung jedoch durch den DC/DC Wandler aus der Strom führenden Leitung versorgt werden kann.

Ist die segmentierte Leitung zwischen den einzelnen Anlagenteilnehmern keine solche zur Stromversorgung, dann dient diese insofern nur der Fehlererkennung.

Die Aufprägung des Signals kann mit analoger und/oder digitaler Modulation (Amplituden-, Frequenz- und/oder Phasenmodulation) erfolgen. Gerade durch die segmentierte elektrische Verbindung zwischen den einzelnen Anlagenteilnehmern, also eine Leitung, die nur zwei benachbarte Teilnehmer einer Anlage verbindet, ist es möglich, von z. B. der Leitstelle aus rückwärts sowohl die Funktionstüchtigkeit der einzelnen Verbindungsleitungen zwischen den Anlagenteilnehmern zu überprüfen, als auch festzustellen, welcher Anlagenteilnehmer aktiv oder nicht aktiv ist.

Bislang ist es so, dass die einzelnen unmittelbar benachbarten Anlagenteilnehmer einer solchen PV-Anlage, zum Beispiel die Wechselrichter, ungeordnet in einer Liste geführt werden, wodurch keine Möglichkeit besteht, aus der Ferne Kenntnis über die Anlagentopologie zu erlangen.

Die Kenntnis über die Anlagentopologie ist allerdings insbesondere für die Erkennung und Lokalisierung von Fehlern von hoher Wichtigkeit. So soll insbesondere die Möglichkeit eröffnet werden festzustellen, welcher beispielsweise Wechselrichter in einer PV-Anlage nicht funktionsfähig ist oder auch um herauszufinden, ob die Verschaltung der Anlage der Planung entspricht.

Üblicherweise besteht zwischen den einzelnen Anlagenteilnehmern nicht nur eine Leitung, insbesondere zur Stromversorgung, sondern es existieren zwischen den einzelnen Anlagenteilnehmern durchgeschleifte Datenleitungen, durch die über die den Anlagenteilnehmern zugeordnete Kommunikationseinrichtungen unter anderem Geräteinformationen, wie zum Beispiel die Gerätekennung, ausgetauscht werden (Bussystem).

Bei einem solchen Bussystem sind alle Teilnehmer über den Bus verbunden. Selbst wenn ein Teilnehmer ausfällt, stört dies die Funktionsfähigkeit des Busses nicht. Ein Weiterreichen von Informationen nur zwischen zwei unmittelbar benachbarten Anlagenteilnehmern ist deswegen nicht möglich. Deshalb kann über einen Bus auch die Anlagentopologie nicht ermittelt werden, gleichwohl eine Buskommunikation durchaus Vorteile hat, wie z. B. schnelle Datenkommunikation, Überbrückung von ausgefallenen Teilnehmern, geringerer Hardwareaufwand.

So ist insbesondere vorgesehen, dass das Signal auf die segmentierte Leitung in unmittelbarem zeitlichen Zusammenhang oder in festgelegter zeitlicher Relation mit dem Erhalt der Gerätekennung steht, die über das Bussystem als Langadresse versendet wird. Der Vorteil hiervon ist eine erhöhte Störsicherheit, wenn man davon ausgeht, dass auf der segmentierten Leitung ebenfalls Störsignale übermittelt werden. Durch die zeitliche Nähe des auf die segmentierte Leitung aufgeprägten Signals mit der über den Bus übermittelten Gerätekennung ist für den Empfänger das aufgeprägte Signal leichter identifizierbar, eben wegen der zeitlichen Korrelation.

Im Einzelnen wird hierbei derart vorgegangen, dass über das Bussystem die Langadresse eines Teilnehmers versendet wird. Diese Adresse erhalten über den Bus sämtliche anderen Teilnehmer, also z. B. Wechselrichter ebenfalls. Bei Erhalt der Langadresse, die auch als Gerätekennung fungiert, schalten alle Teilnehmer mittels der Sender/Empfänger auf Empfang. Erhalten nun zwei der Teilnehmer ein Signal über die segmentierte Leitung, ist für diese Teilnehmer bekannt, dass die erhaltene Langadresse die des unmittelbaren Nachbarn ist. Diese Langadresse oder Gerätekennung wird bei den Nachbarteilnehmern hinterlegt. Auf diese Weise ist die Anlage selbstständig in der Lage, sich zu installieren und die eigene Topologie aufzuzeigen. Ist die Anlagentopologie bekannt, und ist insbesondere auch bekannt, welcher Teilnehmer zu welchem Teilnehmer benachbart ist, besteht die Möglichkeit, über die segmentierte Leitung übermittelte fehlerhafte Signale herauszufiltern. Voraussetzung hierfür ist, dass auch über die segmentierte Leitung bestimmte, den Anlagenteilnehmer kennzeichnende Signale ausgesendet werden, die der Empfänger des benachbarten Teilnehmers identifiziert und abspeichert. Erhält dieser Empfänger später Signale über die segmentierte Leitung, die nicht dem abgespeicherten Signal entsprechen, lässt dies wiederum auf eine Störung schließen. Hierdurch ist somit eine doppelte Kontrolle möglich. Der letzte Teilnehmer weist am Bussystem einen Endwiderstand auf. Da dieser Teilnehmer weiß, welchen Wert der Endwiderstand hat, weiß er auch, dass er von der Seite des Endwiderstands kein Signal eines Nachbarn zu erwarten hat.

Insofern ist insbesondere auch vorgesehen, dass die Kommunikationseinrichtungen der einzelnen Anlagenteilnehmer jeweils Speicher zur Speicherung der Gerätekennung und/oder weiterer Signale des oder der benachbarten Anlagenteilnehmer aufweisen. Hieraus wird weiterhin deutlich, dass im Betrieb über die Datenleitung (Datenbus) die entsprechende Kommunikationseinrichtung des Anlagenteilnehmers erfährt, welchen Teilnehmer dieser Anlagenteilnehmer als Nachbarn hat, und darüber hinaus die Kommunikationseinrichtung durch das beispielsweise auf die Versorgungsleitung aufgeprägte Sinus-Signal auch die Information darüber erhält, ob dieser benachbarte Teilnehmer in Betrieb ist, und ob die Leitung zwischen den Teilnehmern der Anlage funktionsfähig ist. Dies funktioniert in beide Richtungen. Das heißt, wenn lediglich lineare Strukturen zugelassen sind, dann kann jeder Teilnehmer genau zwei benachbarte Teilnehmer mit Aktivitätskennung und Gerätekennung feststellen. Somit können Fehler in der Übertragung der Gerätekennung erkannt werden sowie auch ausgefallene Teilnehmer.

Nach einem weiteren Merkmal der Erfindung besitzt die Kommunikationseinrichtung eine optische oder akustische Einrichtung zur Fehler- und Statusanzeige. Das heißt, für das Überwachungspersonal ist erkennbar, welcher Teilnehmer ausgefallen oder keine Verbindung zum Nachbarn hat. Häufig genug ist eine Vielzahl von Wechselrichtern in Reihe geschaltet. Wenn ein Fehler vorliegt, muss das Überwachungspersonal den Fehlerort detektieren. Hierzu wird die Reihe von Wechselrichtern abgelaufen. Befindet man sich in der Mitte einer Reihe von Wechselrichtern, besteht die Gefahr, dass die Reihe zur falschen Seite abgelaufen wird. Um dies zu verhindern, wird erfindungsgemäß weiterhin vorgeschlagen, die optische Einrichtung derart auszubilden, dass erkennbar ist, in welcher Richtung sich der Ort des Fehlers befindet. So ist insbesondere vorgesehen, dass die Kommunikationseinrichtung auf beiden Seiten, also im Bereich der beiden Ausgänge der segmentierten Leitungen zum Nachbarn, Leuchtmittel unterschiedlicher Farbe aufweist, z. B. rot und grün. Leuchtet auf der einen Seite das rote Licht, ist erkennbar, dass der Fehlerort in dieser Richtung liegt. Der letzte Anlagenteilnehmer bzw. dessen Kommunikationseinrichtung kann dann durch entsprechende Anzeigeelemente aufzeigen, dass nachgeordnet entweder ein Fehler in der segmentierten Leitung oder im benachbarten Anlagenteilnehmer selbst zu finden ist.

Des Weiteren ist vorgesehen, dass bei in Reihe geschalteter Anlagenteilnehmer der letzte Teilnehmer eine Abschlusseinrichtung, z. B. einen Abschlussstecker, aufweist, wobei die Abschlusseinrichtung zumindest mit der Busleitung und/oder der segmentierten Leitung verbunden ist, um dem letzten oder vorhergehenden Teilnehmer zu signalisieren, dass weitere Teilnehmer nicht vorhanden sind. In diesem Zusammenhang ist zur Erleichterung der Ortung von Fehlern von in Reihe geschalteten miteinander kommunizierenden Anlagenteilnehmern vorgesehen, dass die Anlagenteilnehmer, die durch mindestens eine segmentierte Leitung und/oder eine Busleitung miteinander in Verbindung stehen, durch mindestens die segmentierte Leitung ein Signal von dem Anlagenteilnehmer mit der Abschlusseinrichtung, z. B. dem Abschlussstecker, erhalten und dieses Signal an den benachbarten Teilnehmer übertragen wird. Das Signal signalisiert dem benachbarten Teilnehmer, wenn es von diesem empfangen worden ist, dass die Reihe von Anlagenteilnehmern aus der Richtung des Signals funktionsfähig ist. Insbesondere ist vorgesehen, dass das Signal von beiden Enden der in Reihe geschalteten Anlagenteilnehmer abgesandt wird, wobei dann, wenn das Signal von dem jeweiligen Endteilnehmer bei dem anderen Endteilnehmer angekommen ist, die Teilnehmer der in Reihe geschalteten Teilnehmer insgesamt die Funktionsfähigkeit der in Reihe geschalteten Teilnehmer anzeigen, z. B. durch Aufleuchten entsprechender Lampen. Im Fehlerfall setzt sich das Signal von jeder Seite bis zum Ort des Fehlers fort, wobei dann für den Betreiber, beispielsweise durch Aufleuchten entsprechender Lampen an dem Anlagenteilnehmer, erkennbar ist, in welcher Richtung der Fehler zu suchen ist.

Darüber hinaus gilt, dass jeder Anlagenteilnehmer zumindest die Gerätekennung des unmittelbaren Nachbarn kennt. Somit besteht die Möglichkeit, anhand der Anlagentopologie zu erkennen, welcher Anlagenteilnehmer zu welchem weiteren Anlagenteilnehmer benachbart ist. Insofern kann überprüft werden, ob die Anlage korrekt verschaltet ist. Üblicherweise führt jeder Teilnehmer eine Liste über die Teilnehmer im Bussystem der Anlage und speziell darüber, wie bereits erläutert, welcher Anlagenteilnehmer zu welchem anderen Teilnehmer unmittelbar benachbart ist.

Die Vorteile einer Kombination zwischen Bussystem und Aufprägung von Signalen auf die segmentierte Leitung bestehen hauptsächlich in der Topologieerkennung bei geringem Hardware-technischen Aufwand bei gleichzeitiger Beibehaltung der Vorteile des Bussystems, wobei die Sende/Empfängereinheiten der segmentierten Leitung kostengünstig sind.

Nach einer anderen Variante ist vorgesehen, dass das auf die segmentierte Leitung aufgeprägte Signal kennzeichnend für die sendende Sender/Empfängereinheit, und damit kennzeichnend für genau diesen Anlagenteilnehmer ist, wobei das Signal in dem Speicher einer Kommunikationseinrichtung hinterlegt wird. Über ein solches aufgeprägtes Signal wird somit nicht nur die Aktivität des Nachbarn bekannt, sondern gleichfalls auch aufgrund der Signalart bekannt, um welchen Nachbarn es sich handelt; darüber hinaus kann hierüber festgestellt werden, ob die Leitung zwischen den Teilnehmern funktionsfähig ist. Insofern besteht auch nach dieser Variante die Möglichkeit der Erkennung der Anlagentopologie.

Nach einem weiteren Merkmal der Erfindung ist vorgesehen, dass die Kommunikationseinrichtungen der einzelnen Anlagenteilnehmer durch eine übergeordnete Kommunikationseinrichtung, zum Beispiel mit einem Datensammler in einer Leitstelle in Verbindung stehen, in dem zum Beispiel abgespeichert wird, welcher Wechselrichter gerade nicht aktiv oder nicht in Betrieb ist.

Gegenstand der Erfindung ist ebenfalls eine Energieerzeugungsanlage, insbesondere eine PV-Anlage, umfassend eine Mehrzahl an miteinander in Verbindung stehender Teilnehmer, z. B. Wechselrichter, Datenlogger usw., wobei jeder Teilnehmer zur Kommunikation mit dem benachbarten Teilnehmer mindestens eine Sender/Empfängereinheit, sowie eine Kommunikationseinrichtung aufweist, die in Verbindung mit der Sender/Empfängereinheit steht, wobei die Anlagenteilnehmer durch zumindest eine segmentierte Leitung miteinander in Verbindung stehen. Insbesondere sind die Anlagenteilnehmer, insbesondere durch die Kommunikationseinrichtung mittels Sender/Empfängereinheiten, ebenfalls noch durch einen Datenbus miteinander verbunden.

Weiterhin ist Gegenstand der Erfindung eine Kommunikationseinrichtung eines Anlagenteilnehmers, z. B. eines Wechselrichters, Datenloggers usw., umfassend mindestens eine Sender/Empfängereinrichtung. Die Kommunikationseinrichtung kann des Weiteren eine optische Einrichtung zur Ermittlung des Fehlerorts in der Anlage aufweisen. Die optische Einrichtung kann hierbei an jedem Anschlussstecker des Kommunikationskabels oder auf jeder Seite des Gehäuses mehrere Anzeigeelemente, wie Lampen oder LEDs, umfassen, die z. B. unterschiedliche Farben anzeigen können.

Anhand der Zeichnung wird die Erfindung beispielhaft näher erläutert.
- Fig. 1: zeigt in einem Beispiel das Kommunikationssystem von beispielsweise zwei Wechselrichtern als zwei Anlagenteilnehmer einer Gesamtanlage;

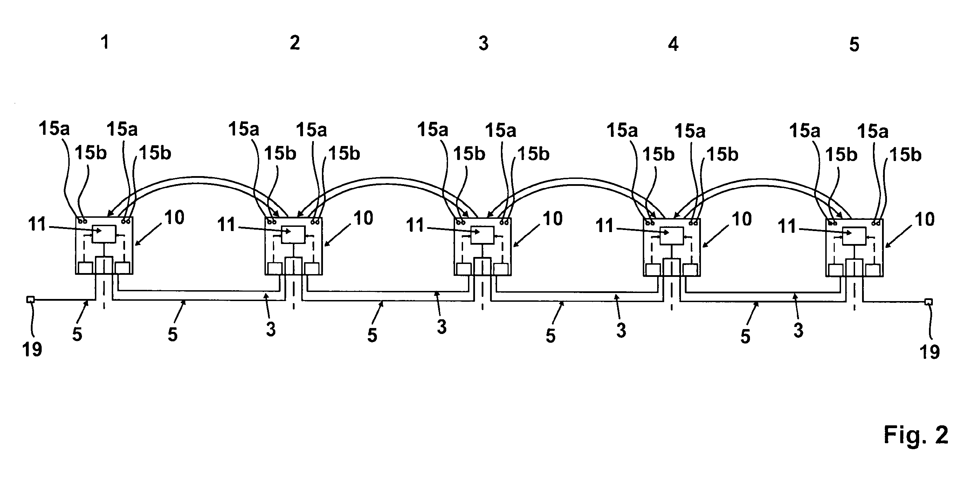

- Fig. 2+3: zeigen das Prinzip der Fehlerortung.

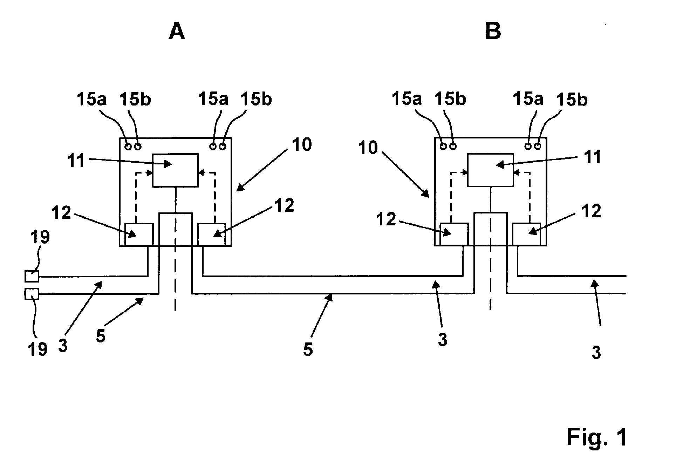

Aus der Zeichnung (Fig. 1) sind zwei Anlagenteilnehmer 10 erkennbar, wobei jeder Anlagenteilnehmer 10 eine Kommunikationseinrichtung 11 aufweist. Darüber hinaus ist jeder Anlagenteilnehmer 10 mit zwei Sender/Empfängereinheiten 12 ausgerüstet, wobei zusätzlich die einzelnen Anlagenteilnehmer, und hier deren Kommunikationseinrichtungen, durch eine durchgeschleifte Datenleitung 5 miteinander in Verbindung stehen. Die einzelnen Sender/Empfängereinheiten 12 sind durch eine sogenannte segmentierte Leitung 3 zur Energieversorgung miteinander verbunden. Die segmentierte Leitung 3 verbindet ausschließlich die Sender/Empfängereinheiten 12 zweier unmittelbar benachbarter Anlagenteilnehmer. Das heißt, wenn auf diese Versorgungsleitung 3 ein Sinus-Signal aufgeprägt wird, dann ist dies nur durch den Empfänger des unmittelbar benachbarten Teilnehmers zu empfangen. Somit besteht die Möglichkeit, in einer PV-Anlage zu ermitteln, welcher Nachbar zu welchem Anlagenteilnehmer gerade nicht aktiv ist, oder auch, welche Verbindungsleitung zwischen diesen Sender/ Empfängereinheiten gerade nicht funktionsfähig ist. Wie bereits ausgeführt sind die Kommunikationseinrichtungen 11 der einzelnen Anlagenteilnehmer 10 durch eine Datenleitung 5 miteinander verbunden, die die einzelnen Anlagenteilnehmer 10 durchgeschleift verbinden. Hierüber erfährt der einzelne Anlagenteilnehmer die Gerätekennung seines Nachbarn sowie aus der Aufprägung des Signals auf die segmentierte Versorgungsleitung 3 Informationen über die Aktivität des Nachbarn. Diese Daten sind in einem Speicher in der Kommunikationseinrichtung 11 des jeweiligen Teilnehmers abgelegt, die insofern mit den Sender/Empfängereinheiten 12 in Verbindung steht. Der Speicher der Kommunikationseinrichtungen kann von einer zentralen Einheit, zum Beispiel einem Leitstand (nicht dargestellt), ausgelesen werden. Die Übermittlung der Informationen von der Kommunikationseinrichtung an eine zentrale Stelle kann drahtgebunden oder drahtlos, zum Beispiel über Bluetooth, erfolgen.

Wie bereits ausgeführt, besteht auch die Möglichkeit, durch Aufprägung eines den jeweiligen Anlagenteilnehmer kennzeichnenden Signals auf die segmentierte Leitung hierüber die Information über den jeweiligen Anlagenteilnehmer zu erhalten. Das heißt, das Signal enthält in diesem Fall inhärent die Gerätekennung des benachbarten Teilnehmers. Diese Information kann in der Kommunikationseinrichtung 11 abgelegt werden.

Für die Funktion der Kommunikation wird noch auf Folgendes hingewiesen: Wenn der eine Teilnehmer A der Anlage auf dem Datenbus (durchgeschleifte Datenleitung 5) seine Kennung dem unmittelbar benachbarten anderen Teilnehmer B übermittelt, wird der eine Teilnehmer auf der Leitung 3 das Signal aufprägen, das ihn als aktiven Teilnehmer auszeichnet. Der andere Teilnehmer B wird nur dann in Bezug auf die segmentierte Leitung 3 aktiviert, d. h. auf Empfang geschaltet, wenn er die Gerätekennung des Nachbarn komplett erhalten hat, um durch die zeitliche Nähe sicherzustellen, dass er dann das entsprechende Signal des Nachbarn auf der Leitung 3 empfängt und nicht ein möglicherweise vorhandenes Rauschen auf der Leitung fälschlicherweise als Signal interpretiert.

Des Weiteren sind an der segmentierten Leitung 3 und am Datenbus 5 Abschlussstecker 19 vorgesehen. Insbesondere der Abschlussstecker 19 am Datenbus signalisierte dem letzten Teilnehmer 10, dass es keinen weiteren benachbarten Teilnehmer gibt. Die Fehlersuche bzw. die Ortung von Fehlern kann von in Reihe geschalteten Anlagenteilnehmern, die miteinander kommunizieren, derart vorgenommen werden, dass die Anlagenteilnehmer durch mindestens eine segmentierte Leitung und/oder eine Busleitung miteinander in Verbindung stehen, wobei durch mindestens die segmentierte Leitung ein Signal beginnend mit dem Anlagenteilnehmer mit dem Abschlussstecker an den benachbarten Teilnehmer übertragen wird, wobei das Signal, wenn es vom benachbarten Teilnehmer empfangen wird, dem benachbarten Teilnehmer signalisiert, dass die Reihe von Anlagenteilnehmern, aus der Richtung, aus der das Signal gekommen ist, funktionsfähig ist. Das heißt, über die segmentierte Leitung 3, mit der alle Teilnehmer von in Reihe geschalteten Teilnehmern miteinander verbunden sind, wird Anlagenteilnehmer für Anlagenteilnehmer überprüft, ob
a) der Anlagenteilnehmer selbst funktionsfähig ist, und ob
b) die Verbindung zwischen den Anlagenteilnehmern funktioniert.

Insbesondere ist vorgesehen, dass bei einer Anzahl von in Reihe geschalteten Anlagenteilnehmern zu beiden Enden der Reihe, die angeordneten Endteilnehmer, also die letzten Teilnehmer, einer Reihe von Anlagenteilnehmern jeweils an ihrem Datenbus einen Abschlussstecker aufweisen, wobei das Signal von beiden Enden der Reihe von Anlagenteilnehmern abgesandt wird. Das heißt, das Signal wird einmal von der einen Seite und einmal von der anderen Seite durch sämtliche Anlagenteilnehmer über die segmentierte Leitung 3 geschickt. Das heißt weiter, dass jeder Teilnehmer von beiden Seiten erfährt, ob sich auf einer Seite ein Fehler befindet. Wenn ein solches Signal beispielsweise zu Testzwecken übertragen wird, dann erhält jeder Teilnehmer von jeder Seite zumindest ein Signal. Die jeweils letzten Teilnehmer erhalten in diesem Fall das zusätzliche Signal von dem Abschlussstecker, der ihnen signalisiert, dass von dieser Seite keine Signale weiterer Anlagenteilnehmer zu erwarten sind. Im Falle eines Fehlers pflanzt sich dieses Signal, das von jeder Seite der Reihe von Anlagenteilnehmern abgesandt wird, nur bis zur Fehlersteller fort. Das heißt, die jeweils letzten Anlagenteilnehmer vor der Fehlerstelle signalisieren zu der fehlerfreien Seite nach außen hin ein OK, zur Fehlerseite hin jedoch eine Fehlermeldung. Das entsprechende Signal kann beispielsweise durch ein entsprechendes Leuchtmittel am Anlagenteilnehmer aufgezeigt werden.

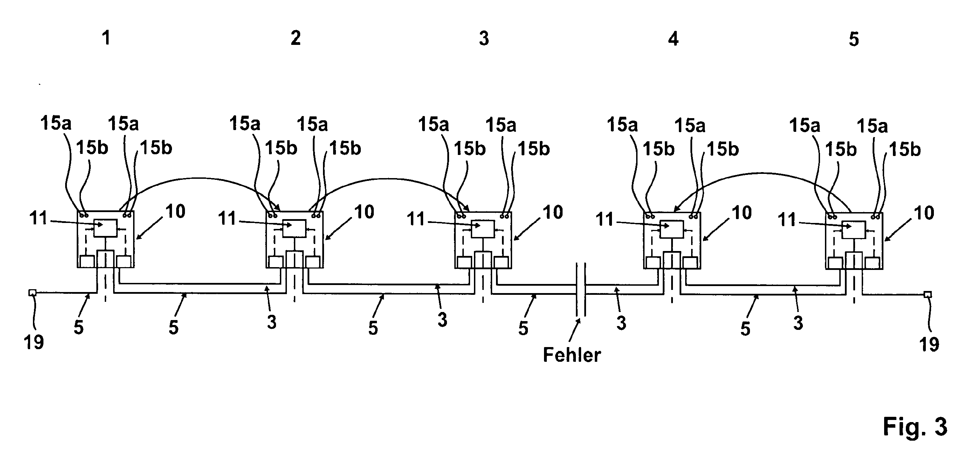

Der Fehlerfall ist dargestellt in Figur 3. In diesem Fall signalisieren die Anlagenteilnehmer 1, 2, 3 von links OK, von rechts nicht OK. Die Anlagenteilnehmer 4 und 5 signalisieren von rechts OK, von links allerdings nicht OK. Dies geschieht z. B. durch auf jeder Seite des Anlagenteilnehmers angeordnete Lampen 15a, 15b in z. B. rot oder grün.

Insofern ist für den Betreiber einer solchen Anlage relativ schnell zu erkennen, wo sich ein Fehler in seiner Anlage befindet.

## Patentansprüche

1. Verfahren zur Fehlererkennung einer Energieerzeugungsanlage oder von Teilen einer Energieerzeugungsanlage, insbesondere einer PV-Anlage, umfassend mehrere Energieerzeuger mit mehreren Anlagenteilnehmern (10), zum Beispiel Wechselrichtern, Datenloggern usw., wobei jeder Anlagenteilnehmer (10) mit mindestens einem benachbarten Anlagenteilnehmer (10) durch eine nur zwischen den beiden unmittelbar benachbarten Teilnehmern bestehende, segmentierte Leitung (3) in Verbindung steht, wobei jeder Teilnehmer (10) mindestens eine Sender/Empfängereinheit (12) aufweist, wobei auf die segmentierte Leitung durch die jeweilige Sender/Empfängereinheit ein Signal , z. B. ein Sinussignal, aufgeprägt wird, das von der Sender/Empfängereinheit (12) des jeweils benachbarten Anlagenteilnehmers empfangen wird.

2. Verfahren nach Anspruch 1,
**dadurch gekennzeichnet,**
**dass** zwischen den einzelnen Anlagenteilnehmern (10) durchgeschleifte Datenleitungen (5) vorgesehen sind, durch die den Anlagenteilnehmern zugeordnete Informationen, unter anderem Geräteinformationen, zum Beispiel die Gerätekennung, ausgetauscht werden.

3. Verfahren nach Anspruch 1,
**dadurch gekennzeichnet,**
**dass** das auf die segmentierte Leitung (3) aufgeprägte Signal kennzeichnend für die sendende Sender/Empfängereinheit des jeweiligen Anlagenteilnehmers (10) ist, wobei das Signal in dem Speicher einer Kommunikationseinrichtung (11) hinterlegt wird.

4. Verfahren nach einem der voranstehenden Ansprüche,
**dadurch gekennzeichnet,**
**dass** das Signal auf die segmentierte Leitung (3) in festgelegter zeitlicher Relation zum Erhalt der Gerätekennung aufgeprägt wird.

5. Verfahren nach einem der voranstehenden Ansprüche,
**dadurch gekennzeichnet,**
**dass** die Kommunikationseinrichtungen (11) der einzelnen Anlagenteilnehmer jeweils einen Speicher zur Speicherung u. a. der Gerätekennung und/oder des auf die segmentierte Leitung (3) aufgeprägten Signals des oder der benachbarten Anlagenteilnehmer (10) aufweisen.

6. Verfahren nach einem der voranstehenden Ansprüche,
**dadurch gekennzeichnet,**
**dass** die Kommunikationseinrichtungen (11) der einzelnen Anlagenteilnehmer (10) durch mindestens eine übergeordnete Kommunikationseinrichtung, zum Beispiel einen Datensammler, miteinander in Verbindung steht.

7. Verfahren nach einem der voranstehenden Ansprüche,
**dadurch gekennzeichnet,**
**dass** die Aufprägung des Signals auf die segmentierte Leitung mit einer analogen und/oder digitalen Modulation erfolgt.

8. Verfahren nach einem der voranstehenden Ansprüche,
**dadurch gekennzeichnet,**
**dass** die segmentierte Leitung (3) der Stromversorgung dient.

9. Verfahren nach einem der voranstehenden Ansprüche,
**dadurch gekennzeichnet,**
**dass** die Kommunikationseinrichtung (11) eine optische Einrichtung zur Fehleranzeige aufweist.

10. Verfahren nach Anspruch 9,
**dadurch gekennzeichnet,**
**dass** durch die optische Einrichtung einer jeden Kommunikationseinrichtung (11) bei einer Vielzahl in Reihe angeordneter Anlagenteilnehmer (10) erkennbar ist, in welcher Richtung sich der fehlerhafte Anlagenteilnehmer oder die fehlerhafte segmentierte Leitung (3) befindet.

11. Verfahren nach einem der voranstehenden Ansprüche,
**dadurch gekennzeichnet,**
**dass** bei in Reihe geschalteter Anlagenteilnehmer (10) der letzte Teilnehmer eine Abschlusseinrichtung, z. B. einen Abschlussstecker, aufweist, wobei die Abschlusseinrichtung (19) zumindest mit der Busleitung (5) und/oder der segmentierten Leitung (3) verbunden ist, um dem letzten oder vorhergehenden Teilnehmer zu signalisieren, dass weitere Teilnehmer nicht vorhanden sind.

12. Verfahren nach einem der voranstehenden Ansprüche,
**dadurch gekennzeichnet,**
**dass** zur Ortung von Fehlern von in Reihe geschalteten, miteinander kommunizierenden Anlagenteilnehmern (10), die Anlagenteilnehmer (10) durch mindestens eine segmentierte Leitung (3) und/oder eine Busleitung (5) miteinander in Verbindung stehen, wobei durch mindestens die segmentierte Leitung (3) ein Signal von dem Anlagenteilnehmer mit der Abschlusseinrichtung, z. B. dem Abschlussstecker, ausgeht und an den benachbarten Teilnehmer übertragen wird, wobei das Signal, wenn es vom benachbarten Teilnehmer empfangen worden ist, diesem benachbarten Teilnehmer signalisiert, dass die Reihe von Anlagenteilnehmern aus der Richtung des Signals funktionsfähig ist.

13. Verfahren nach Anspruch 12,
**dadurch gekennzeichnet,**
**dass** sich bei einer Reihe von Anlagenteilnehmern (10), wobei die jeweils endseitig angeordneten Teilnehmer (Endteilnehmer) eine Abschlusseinrichtung, z. B. einen Abschlussstecker, aufweisen, das Signal von beiden Enden der in Reihe geschalteten Anlagenteilnehmer abgesandt wird, wobei dann, wenn das Signal von dem jeweiligen Endteilnehmer bei dem anderen Endteilnehmer angekommen ist, die Teilnehmer der in Reihe geschalteten Teilnehmer insgesamt die Funktionsfähigkeit der in Reihe geschalteten Teilnehmer anzeigen.

14. Energieerzeugungsanlage, insbesondere PV-Anlage für ein Verfahren gemäß einem der Ansprüche 1 -13, umfassend eine Mehrzahl an miteinander in Verbindung stehender Teilnehmer, z. B. Wechselrichter, Datenlogger usw., wobei jeder Anlagenteilnehmer (10) eine Kommunikationseinrichtung (11) zur Kommunikation mit dem benachbarten Teilnehmer (10) durch mindestens eine Sender/Empfängereinheit (12) aufweist, wobei die Kommunikationseinrichtungen (11) durch die jeweiligen Sender/Empfängereinheiten (12) durch zumindest jeweils eine segmentierte Leitung (3) miteinander in Verbindung stehen.

15. Energieerzeugungsanlage nach Anspruch 14,
**dadurch gekennzeichnet,**
**dass** die Kommunikationseinrichtungen (11) sämtlicher Anlagenteilnehmer (10) mittels Sender/Empfängereinheiten (12) durch einen Datenbus (5) miteinander in Verbindung stehen.

16. Kommunikationseinrichtung (11) eines Anlagenteilnehmers (10), z. B. eines Wechselrichters, Datenloggers usw., umfassend mindestens eine Sender/Empfängereinheiten (12) als Teil einer Energieerzeugungsanlage gemäß Anspruch 14 oder 15.

17. Kommunikationseinrichtung nach Anspruch 16,
**dadurch gekennzeichnet,**
**dass** die Kommunikationseinrichtung (11) eine optische Einrichtung zur Anzeige der Richtung zu einem Fehlerort aufweist.
